# EUROPÄISCHE PATENTANMELDUNG

(11) **EP 1 489 264 A1**
(43) Veröffentlichungstag der Anmeldung: **22.12.2004**
(21) Anmeldenummer: 03013857.2
(22) Anmeldetag: 18.06.2003
(51) Int. Cl.: F01D 5/14, F01D 5/28, F01D 5/12, F01D 9/02

(54) **Modular aufgebaute Schaufel**

(71) Anmelder: SIEMENS AKTIENGESELLSCHAFT, 80333 München (DE)
(72) Erfinder: Ahmad, Fathi, 41564 Kaarst (DE); Buchal, Tobias, Dr., 40489 Düsseldorf (DE); Dankert, Michael, Dr., 63069 Offenbach (DE); Lang, Gernot, 52499 Baesweiler (DE); Scheurlen, Michael, Dr., Orlando, Florida 32826 (US)

(57) **Zusammenfassung**

Es wird eine Schaufel zum Einsatz in Strömungsmaschinen mit einem Schaufelblatt und einem Befestigungselement offenbart. Um eine höhere Lebensdauer der Schaufeln der Strömungsmaschine zu erreichen und gleichzeitig die Wartungskosten zu verringern, wird vorgeschlagen, dass das Schaufelblatt einen modularen Aufbau aufweist.

## Beschreibung

Die Erfindung bezieht sich auf eine Schaufel zum Einsatz in Strömungsmaschinen mit einem Schaufelblatt und einem Befestigungselement.

Derartige Schaufeln werden beispielsweise in Turbinen und Verdichtern eingesetzt. Sie finden dabei als Leit- und als Laufschaufeln Verwendung und werden in der Kombination von Leit und Laufschaufeln als Stufen eingesetzt.

Es ist dabei aus der US 3,992,127 bekannt, Leitschaufeln aus Keramiken herzustellen. Aus der US 5,743,713 ist bekannt, keramische Schaufeln als Läuferschaufeln einzusetzen. Des weiteren werden Schaufeln aus Metallen hergestellt, wobei insbesondere Ni-Basislegierungen oder Ti-Al-Legierungen Verwendung finden.

Die Lebensdauer derartiger Schaufeln wird dabei durch Oxidation und mechanische Beanspruchung reduziert. Derartiger Verschleiß tritt allerdings an den einzelnen Bereichen der Schaufeln unterschiedlich stark über den zeitgemäßen Verlauf der Lebensdauer auf. Ist der Verschleißtoleranzbereich für die am stärksten beanspruchten Bereiche der Schaufeln erreicht, so wird die Schaufel ausgetauscht.

Weiterer Verschleiß tritt dadurch auf, dass in den dünneren Bereichen der Schaufeln, beispielsweise die Hinterkante des Schaufelblatts, die Wärmeabfuhr aus der Schaufel heraus schlechter bewerkstelligt werden kann als in den dickeren Bereichen. Erschwert wird dieses dadurch, dass in Folge von Festigkeitsanforderungen bei Laufschaufeln im nabennahen Bereich Hochfestigkeitswerkstoffe eingesetzt werden, die eine relativ geringe Wärmeleitfähigkeit aufweisen.

Der Erfindung liegt die Aufgabe zugrunde, die Lebensdauer der Schaufeln zu erhöhen und gleichzeitig die Wartungs- und Herstellungskosten der Strömungsmaschinen zu verringern.

Gelöst wird diese Aufgabe erfindungsgemäß dadurch, dass das Schaufelblatt einen modularen Aufbau aufweist. Durch den modularen Aufbau können gezielt stärker verschlissene Bereiche der Schaufelblätter ausgetauscht werden. Dieses erhöht die Einsatzdauer von Modulen, die geringerem Verschleiß unterworfen sind. Des weiteren können die Bereiche gezielt auf die mechanischen und thermischen Anforderungen angepasst werden.

Eine bevorzugte Ausführungsform der Erfindung sieht vor, dass der modulare Aufbau durch Segmente erfolgt. Durch die Segmentierung lassen sich Standardsegmente für die einzelnen Schaufelgrößen herstellen, wodurch bezogen auf den Einsatz und den Verschleiß die Kosten durch Standardisierung weiter gesenkt werden können. Dabei ist es vorteilhaft, wenn die Segmente unterschiedliche Dimensionierungen aufweisen, so dass die Bereiche der einzelnen Verschleißstärken optimal zusammengefaßt werden können. Die Segmente sind dabei formschlüssig, stoffschlüssig und/oder kraftschlüssig miteinander verbunden. Dieses kann durch Presspassung, Löten, Schweißen, Kleben, Stiftverbindungen oder beispielsweise Vulkanisieren erfolgen. Vorteilhafterweise sind dabei die Segmentverbindungsflächen horizontal, vertikal und/oder diagonal ausgerichtet.

Eine weitere Lehre der Erfindung sieht vor, dass die das Schaufelblatt ergebenden Segmente aus unterschiedlichen Werkstoffen hergestellt sind. Dieses ist vorteilhaft, da Bereiche vorhanden sind, die stärker mechanischer Beanspruchung ausgesetzt sind und Bereiche, die stärker thermischen Beanspruchungen ausgesetzt sind, so dass durch die verschiedenen Werkstoffe das Schaufelblatt in seinem segmentierten Aufbau optimal an die einzelnen Verschleißbedingungen angepaßt werden können. Dabei kann gemäß einer weiteren Lehre der Erfindung ein Teil der Segmente aus einem besonders wärmeleitfähigen Werkstoff und ein weiterer Teil aus einem hochtemperaturbeständigen Werkstoff hergestellt sein.

Als Materialien kommen dabei Keramikmaterial, Metalle, Metalllegierungen und Kunststoffmaterialien in Frage. Zusätzlich sieht eine weitere Lehre der Erfindung vor, dass die Segmente beschichtet sind. Dadurch lassen sich gezielt die Eigenschaften der Segmente weiter beeinflussen.

Zur Reduktion von Gewicht können die Segmente Hohlräume aufweisen. Diese Hohlräume können dabei mit einem Material aufgefüllt werden, das von dem Segmentwerkstoff unterschiedlich ist. Hierbei kann es sich beispielsweise um Schäume handeln. Auf diese Weise lassen sich gezielt Festigkeitseigenschaften der Segmente beeinflussen.

Eine weitere Lehre der Erfindung sieht vor, dass die Schaufeln ein Innenskelett aufweisen, an dem die Segmente befestigt sein können. Auf diese Weise können leichte Schaufeln 20 mit einem stabilen Stützgerüst hergestellt werden. Das Schaufelblatt wird dabei von einem dünnwandigen Mantel gebildet, der das Innenskelett umgibt und somit von diesem getragen wird. Die Auslegung des Mantels ist dabei so gewählt, dass eine freie Bewegung des Mantels in radialer Richtung gewährleistet ist. Somit entstehen im Mantel weniger thermische Spannungen. Im Falle eines Risses im Mantel wird die mechanische Festigkeit der Schaufel nicht vermindert, da diese nur vom Innenskelett sichergestellt wird.

Bereiche, die starkem Verschleiß ausgesetzt sind und die als speziell ausgeführte Segmente gemäß einer weiteren Lehre der Erfindung ausgestaltet sind, sind die Hinterkante des Schaufelblatts, die Nase und die Spitze des Schaufelblatts. Diese Bereiche können dann gezielt nach Verschleißbedingungen ausgetauscht werden.

Des weiteren ist es durch den modularm Aufbau möglich, bei Bereichen, die bei einer einteiligen Herstellung der Schaufeln im Herstellungsprozess problematisch herzustellen waren, durch gezieltes separates Herstellen der Segmente Fehleranfälligkeiten zu minimieren.

Weitere Merkmale und Vorteile der Erfindung ergeben sich aus der nachfolgenden Beschreibung der zugehörigen Zeichnung, in der ein Ausführungsbeispiel eines modularm Aufbaus eines Schaufelblattes für eine Strömungsmaschine schematisch dargestellt ist. In der Zeichnung zeigen:
- Fig. 1: eine perspektivische Seitenansicht einer erfindungsgemäßen Laufschaufel auf einem Läufer,
- Fig. 2a: eine perspektivische Seitenansicht eines erfindungsgemäßen Schaufelblatts,
- Fig. 2b: eine schematische Draufsicht auf eine erfindungsgemäße Schaufel,
- Fig. 3a: eine horizontale Schnittansicht in Draufsicht einer erfindungsgemäßen Schaufel,
- Fig. 3b: eine Seitenansicht eines Ausführungsbeispiels einer erfindungsgemäßen Schaufel,
- Fig. 3c: eine schematische Schnittansicht in Draufsicht einer erfindungsgemäßen Schaufel,
- Fig. 4a: eine Schnittansicht eines Vorderbereichs einer erfindungsgemäßen Schaufel in Draufsicht,
- Fig. 4b: eine perspektivische Seitenansicht einer weiteren vorteilhaften Ausführung der Erfindung,
- Fig. 4c: eine schematische Schnittansicht in Draufsicht einer weiteren Ausführung der Erfindung,
- Fig. 5: eine perspektivische Ansicht eines Innenskeletts einer Schaufel,
- Fig. 6: eine perspektivische Ansicht des Innenskeletts mit einem Mantel.
Gasströmungsmaschinen verwenden Schaufelstufen, die aus gegenüber angeordneten Lauf- und Leitschaufeln bestehen. Die Leitschaufeln sind dabei am Gehäuse der Maschine angebracht, während die Laufschaufeln in direkter Verbindung mit dem Rotor vorgesehen sind. Die Laufschaufeln sind dabei auf einem Läufer angeordnet.

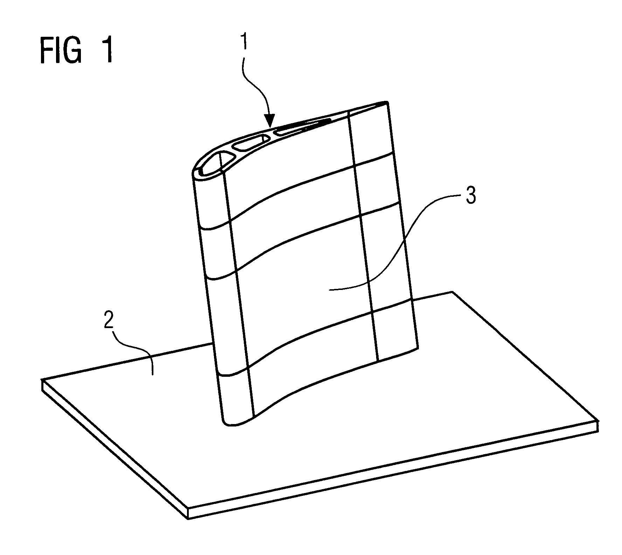

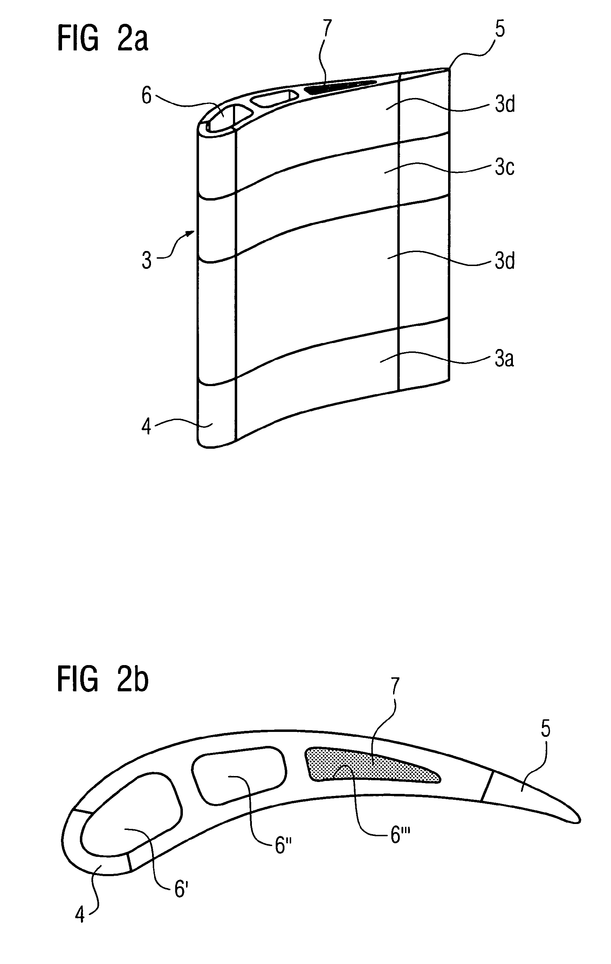

In Fig. 1 ist eine modular aufgebaute Schaufel 1 dargestellt, die auf einem Befestigungselement 2 angeordnet ist, bei dem es sich um besagten Läufer handeln kann. Die Schaufel selbst weist ein Schaufelblatt 3 auf, welches wie in Fig. 2a dargestellt eine Nase 4 und eine Hinterkante 5 aufweist. Das Schaufelblatt 3 ist dabei durch mehrere Schaufelblattsegmente 3a bis 3d aufgebaut, wobei die einzelnen Segmente unterschiedliche Höhen aufweisen. Wie an der Oberseite des Segments 3d erkennbar ist, weisen die Segmente mehrere Hohlräume 6 auf. Diese dienen dazu, bei hinreichender Festigkeit die Schaufelmasse zu reduzieren, um damit die mechanischen Belastungen im Betrieb zu verringern. Wie in Fig. 2b dargestellt, können dabei ein mehrere Hohlräume 6' bis 6"' mit einem Schaum 7 ausgefüllt werden, um die Festigkeit des Schaufelblatts zu erhöhen. Des weiteren ist in Fig. 2b dargestellt, dass die Nase 4 und die Hinterkante 5 ebenfalls modular ausgeführt sein können und an den Segmenten des Schaufelblatts vertikal befestigt sind.

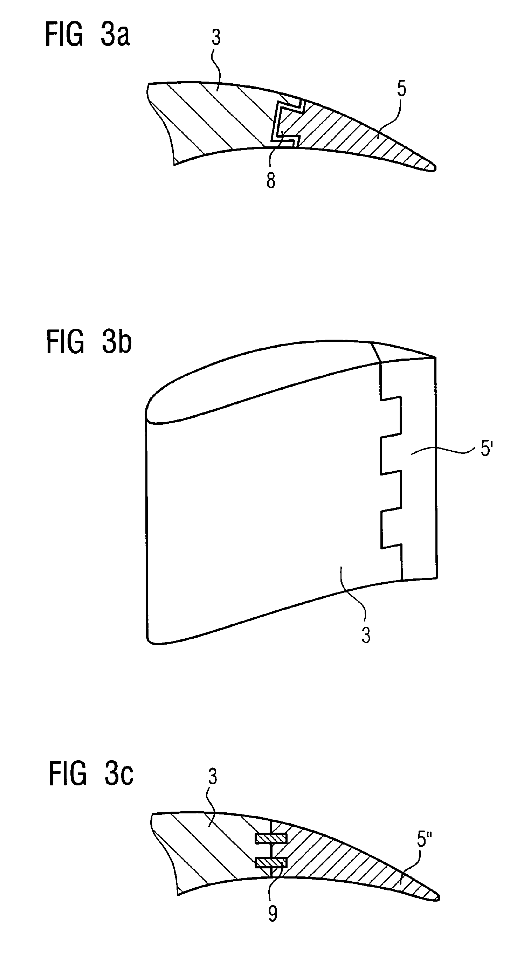

Für die Hinterkante ist die modulare Zusammensetzung in den Figuren 3a bis 3c dargestellt. Dabei zeigt Fig. 3a, dass die Hinterkante 5 für eine Presspassung 8 mit dem Schaufelblatt 3 verbunden ist. Fig. 3b zeigt eine Steckverbindung der Hinterkante 5' mit dem Schaufelblatt 3. In Fig. 3c ist eine Stiftverbindung zwischen der Hinterkante 5" und dem Schaufelblatt 3 im Schnitt dargestellt. Dabei werden zwischen der Hinterkante 5" und dem Schaufelblatt 3 Stifte 9 eingesetzt, die eine stabile Verbindung bewirken.

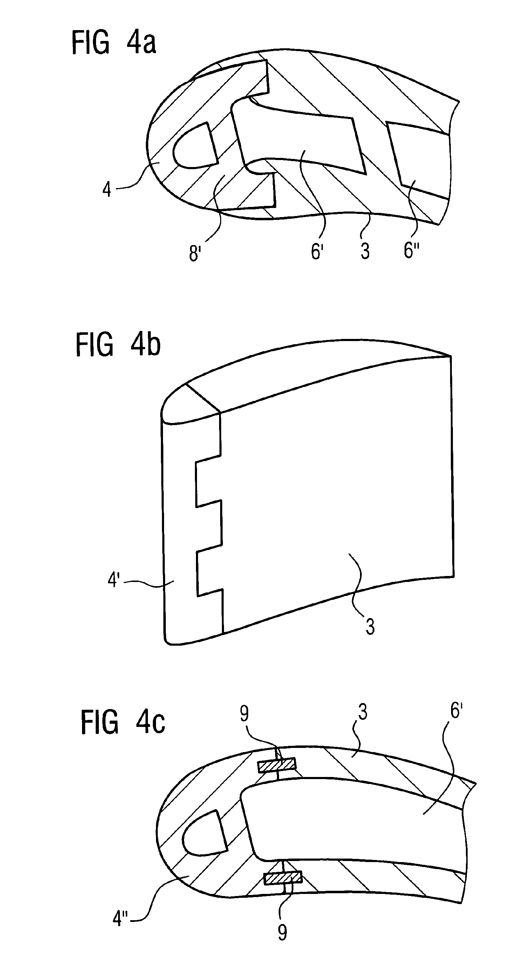

In ähnlicher Weise ist in den Fig. 4a bis 4c der segmentartige Aufbau der Nase 4 in Bezug auf das Schaufelblatt 3 dargestellt. Dabei ist die Verbindung zwischen der Nase 4 und dem Schaufelblatt 3 in Fig. 4a über eine Presspassung 8, in Fig. 4b über eine Steckverbindung und in Fig. 4c mittels Stiften 9 hergestellt.

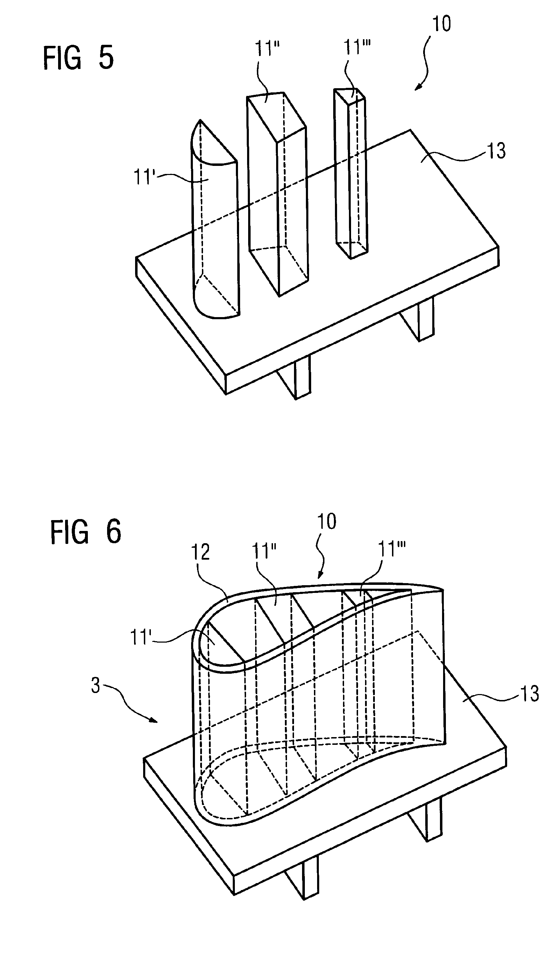

Fig. 5 zeigt einen einstückigen durch einen Gussverfahren hergestellten Rohling, welches zur Herstellung einer Leitschaufel dient. Die drei zueinander beabstandeten ein Innenskelett 10 bildende Stützsäulen 11 erstrecken sich jeweils quer zu der Plattform 13, die an einem Leitschaufelfuß vorgesehen ist. Die erste Stützsäule 11' ist im vorderen Bereich, im Nasenbereich, der Leitschaufel angeordnet, die zweite Stützsäule 11" im Mittelbereich und die dritte Stützsäule 11"' im Hinterkantenbereich der Leitschaufel.

Durch das Anbringen eines Mantels 12 wird das profilierte Schaufelblatt 3 geformt, welches der Strömung aussetzbar ist. Nach Fertigstellung der Leitschaufel ist, wie in Fig. 6, dargestellt, das Innenskelett 10 von dem dünnwandigen Mantel 12 umgeben. Die drei Stützsäulen 11 des Innenskeletts 10 stützten Mantel 12, so dass die Leitschaufel den im Betrieb auftretende thermischen und mechanischen Belastungen widersteht. Der Mantel 12 kann dabei über die Länge einer Stützsäule 11 vollständig an dieser anliegen, oder um Kühlkanäle zwischen ihnen auszubilden, auch nur teilweise.

Durch die Aufteilung der Leitschaufel in mehrere Komponenten kann die Gussgenauigkeit reduziert werden, was zu einer Kostensenkung beiträgt. Ferner kann bei der Wiederaufarbeitung der Leitschaufel nur der verschlissene Mantel ersetzt werden.

## Patentansprüche

1. Schaufel zum Einsatz in Strömungsmaschinen mit einem Schaufelblatt und einem Befestigungselement,
**dadurch gekennzeichnet,**
**dass** das Schaufelblatt einen modularen Aufbau aufweist.

2. Schaufel nach Anspruch 1,
**dadurch gekennzeichnet,**
**dass** der modulare Aufbau durch Segmente erfolgt.

3. Schaufel nach Anspruch 2,
**dadurch gekennzeichnet,**
**dass** die Segmente unterschiedlich dimensioniert sind.

4. Schaufel nach Anspruch 2 oder 3,
**dadurch gekennzeichnet,**
**dass** die Segmente formschlüssig, stoffschlüssig und/oder kraftschlüssig verbunden sind.

5. Schaufel nach einem der Ansprüche 2 bis 4,
**dadurch gekennzeichnet,**
**dass** Segmentverbindungsflächen horizontal, vertikal und/oder diagonal ausgerichtet sind.

6. Schaufel nach einem der Ansprüche 2 bis 5,
**dadurch gekennzeichnet,**
**dass** die das Schaufelblatt ergebenden Segmente aus unterschiedlichen Werkstoffen hergestellt sind.

7. Schaufel nach einem der Ansprüche 2 bis 6,
**dadurch gekennzeichnet,**
**dass** mindestens ein Segment aus einem besonders wärmeleitfähigen Werkstoff hergestellt ist.

8. Schaufel nach einem der Ansprüche 2 bis 7,
**dadurch gekennzeichnet,**
**dass** mindestens ein Segment aus einem hochtemperaturbeständigen Werkstoff hergestellt ist.

9. Schaufel nach einem der Ansprüche 2 bis 8,
**dadurch gekennzeichnet,**
**dass** mindestens ein Segment aus einem Keramikmaterial hergestellt ist.

10. Schaufel nach einem der Ansprüche 2 bis 9,
**dadurch gekennzeichnet,**
**dass** mindestens ein Segment aus einem Metall und/oder aus einer Metalllegierung hergestellt ist.

11. Schaufel nach einem der Ansprüche 2 bis 10,
**dadurch gekennzeichnet,**
**dass** mindestens ein Segment aus einem Kunststoffmaterial hergestellt ist.

12. Schaufel nach einem der Ansprüche 2 bis 11,
**dadurch gekennzeichnet,**
**dass** die Segmente beschichtet sind.

13. Schaufel nach einem der Ansprüche 2 bis 12,
**dadurch gekennzeichnet,**
**dass** mindestens ein Segment einen Hohlraum aufweist.

14. Schaufel nach Anspruch 13,
**dadurch gekennzeichnet,**
**dass** der Hohlraum mit einem vom Segmentmaterial unterschiedlichen Werkstoff aufgefüllt ist.

15. Schaufel nach einem der Ansprüche 1 bis 14,
**dadurch gekennzeichnet,**
**dass** das Schaufelblatt ein Innenskelett aufweist.

16. Schaufel nach Anspruch 15,
**dadurch gekennzeichnet,**
**dass** die Segmente am Innenskelett befestigt sind.

17. Schaufel nach Anspruch 15,
**dadurch gekennzeichnet,**
**dass** zum Formen des Schaufelblatts ein Mantel das Innenskelett umgibt und mit diesem verbunden ist.

18. Schaufel nach einem der Ansprüche 2 bis 17,
**dadurch gekennzeichnet,**
**dass** eine Hinterkante des Schaufelblatts als Segment ausgeführt ist.

19. Schaufel nach einem der Ansprüche 2 bis 18,
**dadurch gekennzeichnet,**
**dass** eine Nase des Schaufelblatts als Segment ausgeführt ist.

20. Schaufel nach einem der Ansprüche 2 bis 19,
**dadurch gekennzeichnet,**
**dass** eine Spitze des Schaufelblatts als Segment ausgeführt ist.

21. Schaufel nach einem der Ansprüche 1 bis 20,
**dadurch gekennzeichnet,**
**dass** die Schaufel als Leitschaufel ausgebildet ist.

22. Schaufel nach einem der Ansprüche 1 bis 20,
**dadurch gekennzeichnet,**
**dass** die Schaufel als Laufschaufel ausgebildet ist.

23. Gasturbine mit einer Schaufel nach einem der Ansprüche 1 bis 22.
